Europäisches Patentamt

European Patent Office

Office européen des brevets

(19)

(11) Veröffentlichungsnummer: **0 302 281**
**A2**

(12) **EUROPÄISCHE PATENTANMELDUNG**

(21) Anmeldenummer: **88111381.5**

(22) Anmeldetag: **15.07.88**

(51) Int. Cl.⁴: **B60N 1/00 , B60H 1/00**

(30) Priorität: **31.07.87 DE 3725408**

(43) Veröffentlichungstag der Anmeldung:
**08.02.89 Patentblatt 89/06**

(84) Benannte Vertragsstaaten:
**DE ES FR GB IT**

(71) Anmelder: **AUDI AG**
**Postfach 220**
**D-8070 Ingolstadt(DE)**

(72) Erfinder: **Soder, Gerd**
**Nelkenstrasse 3a**
**D-8071 Wettstetten(DE)**
Erfinder: **Bergmann, Emil**
**Kiefernweg 15**
**D-8074 Gaimersheim(DE)**
Erfinder: **Mahler, Hubert**
**Estenfelder Strasse 2**
**D-8709 Rimpar(DE)**
Erfinder: **Meier, Josef**
**Ludwig-Thoma-Strasse 13**
**D-8073 Kösching(DE)**
Erfinder: **Adickes, Henning**
**Hupfauer Strasse 8**
**D-8070 Ingolstadt(DE)**

(74) Vertreter: **Engelhardt, Harald**
**AUDI AG Patentabteilung Postfach 220**
**D-8070 Ingolstadt(DE)**

(54) **Verfahren zur Herstellung eines beheizbaren Fahrzeugsitzes, Fahrzeugsitz und Auflage.**

(57) Es wird ein Verfahen zur Herstellung eines flächenhaft elektrisch beheizbaren Fahrzeugsitzes und/oder einer Fläche im Sitzbereich des Fahrzeuges mit einer aufklebbaren Auflage beschrieben. Die Auflage (2) für den Sitz (1) aus Schaumstoff bildet ein selbstständiges Teil und wird für die unterschiedlichsten Formen von Sitzen verwendet. Die Auflage (2) besteht aus Schaumstoff mit eingebettetem Heizleiter (11) und wird nach dem Aufkleben auf den Sitz (1) mit einem gewünschten Bezugsstoff (10) überzogen.

Fig.2

## Verfahren zur Herstellung eines beheizbaren Fahrzeugsitzes, Fahrzeugsitz und Auflage

Die Erfindung bezieht sich auf ein Verfahren zur Herstellung eines beheizbaren Fahrzeugsitzes, Fahrzeugsitz und Auflage.

Ein textiles Flächengebilde gemäß dem Oberbegriff des Patentanspruchs 1 ist aus der EP-A1-19 177 bekannt. Dort sind die vielseitigen Beanspruchungen, denen ein solches Heizelement im Betrieb, bei Anwendung auf einen Autositz, unterliegt, ausführlich beschrieben. Insbesondere mechanische Schwingungsbeanspruchungen können die Heizung beeinträchtigen, besonders, da eine gleichmäßige Wärmeabgabe erwünscht ist. Bisher wurde deshalb meist das Heizelement mit dem Bezugsstoff fest verbunden, insondere eingenäht oder in Taschen des Bezugsstoffes eingeschoben und darin befestigt. Der Heizdraht wird dabei nach einem vorbestimmten Muster, z. B. mäanderförmig, auf den flexiblen, flächigen Träger aufgenäht.

Auch in einem Hohlraum zwischen zwei Stoffzuschnitten verlegt Heizleiter wurden bei bekannten Heizelementen angewandt und dem Bezugsstoff zugeordnet.

Die bekannten Heizelemente sind deshalb jeweils vom verwendeten Bezugsstoff abhängig und ihre Montage erfordert einen relativ großen Aufwand. Dies ist besonders für eine Serienfertigung unerwünscht.

Aufgabe der Erfindung ist es, eine Heizung für Fahrzeugsitze zu schaffen, die einen möglichst einfachen Einbau in stets gleicher Weise - unabhängig vom Bezug - gestattet. Die Aufgabe umfaßt auch einen möglichst einfach herzustellenden heizbares Fahrzeugsitz, unabhängig vom Design der Sitzoberfläche.

Eine Lösung der Erfindung ist in den kennzeichnenden Merkmalen des Patentanspruchs 1 enthalten. Ein auf erfindungsgemäße Weise beheizbarer Fahrzeugsitz ist in Anspruch 9 und ein Verfahren zu seiner Herstellung in Anspruch 10 angegeben.

Dadurch, daß die Heizung als selbständiges Teil ausgebildet ist, das mit dem Körper des Fahrzeugsitzes bzw. dem Sitzpolster verklebt ist, ergibt sich ein einfacher Einbau in stets gleichbleibender Art und Weise, unabhängig vom Bezug.

Eine Befestigung des Heizelementes am Sitzbezug entfällt. Dadurch können alle Fahrzeugsitze unabhängig von einer späteren Spezialausstattung in gleichbleibender Weise in Serie gefertigt werden.

Die Auflage kann nicht nur bei Kraftfahrzeugsitzen (Sitzpolster, Lehne) eingesetzt werden, sondern auch bei Türverkleidungen usw.. Neuerdings ( um große strahlende Flächen zu erreichen) wird versucht, Heizungen auch in Bodenmatten, Armaturenbrett und Sonnenblenden einzubauen.

Dadurch die erfindungsgemäße Verfahrensweise ergibt sich eine Reihe von Vorteilen.

Dadurch, daß keine Haltevorrichtungen oder Befestigungsmittel für die gefügten Teile nötig sind, ist das Kleben weitaus wirtschaftlicher.

Gleichzeitig mit dem Kleben kann ein anderer Arbeitsgang durchgeführt werden.

Vorteilhaft ist es, wenn die Heizung für den Fahrzeugsitz aus einer Schaumstoffauflage mit darin eingebettetem elektrischem Heizleiter besteht. Ein Schaumstoff, insbesondere Weichschaumstoff, ist für den vorgesehenen Zweck ausreichend elastisch und anschmiegsam an die Form des Polsters bzw. Sitzkörpers und an eine Person. Der Schaumstoff kann in seinen Eigenschaften so gewählt werden, daß er mit Vorteil gleich oder ähnlich denjenigen des Polsters oder Sitzkörpers ist (z. B. Elastizität, Schwingungs-und Dämpfungsverhalten, Luft- und Wasserdampfdurchlässigkeit, Entflammbarkeit, Raumgewicht, Herstellungsverfahren und anderes).

Neben Schaumstoff können auch andere geeignete synthetische oder natürliche Stoffe oder Gewebe Verwendung finden.

Vorteilhaft ist es auch, wenn die beheizbare Auflage für den Fahrzeugsitz aus miteinander verklebten Schaumstoffteilen besteht, die zwischen sich den elektrischen Heizleiter aufnehmen. Die Schaumstoffteile können dabei in beliebiger Form hergestellt werden, können leicht zugeschnitten und auf eine gewünschte Endform (Sitzkissen) gebracht werden, und lassen sich auf einfachste Weise fertig montieren.

In besonders vorteilhafter Weise ist die beheizbare Auflage einsseitig mit einem Klebemittel versehen. Dadurch ist die Auflage direkt zur Aufbringung auf dem Fahrzeugsitz geeignet. Besonders bewährt hat es sich, die Auflage einseitig mit einem Klebeband, insbesondere mit einem Doppelklebeband, zu versehen. Hierdurch entfallen Vorbereitungsarbeiten und Vorbereitungszeiten für das Kleben.

Ein weitere Vorteil besteht darin, daß das gleiche Heizelement für unterschiedlich geformte Sitze Verwendung finden kann. Dies führt zu einer erheblichen Kostenersparnis. Außerdem besteht der Vorteil, daß eine Vorkonfektionierung des Heizelementes möglich ist, unabhängig vom Ort des Einbaues. Ein weiterer Vorteil besteht darin, daß das gleiche Heizelement für unterschiedliche Sitze Verwendung finden kann.

Dadurch, daß die Auflage im Doppelklebeband eine Lochung oder Perforierung aufweist wird das Sitzklima verbessert durch verbesserten Feuchte- und Wärmetransport.

Dadurch, daß auf der Klebeseite noch eine Schutzabdeckung vorgesehen ist, die erst unmittelbar vor der Verklebung enfernt wird, läßt sich eine Verschmutzung der Klebefläche vermeiden. Für eine Serienfertigung ergibt sich der weitere Vorteil, daß erst am Montageband die Schutzabdeckung abgezogen wird, wenn die Verklebung der beheizbaren Auflage mit dem Sitzkörper, bzw. Sitzpolster erfolgt. Da Polster und beheizbare Auflage getrennt hergestellt werden, lassen sich bis zu ihrer Verklebung auch getrennte, unterschiedlich lange Lagerzeiten (Wochen und Monate) überbrücken.

Eine Lösung der Erfindung ist unabhängig von vorstehendem darin zu sehen, daß durch die Kombination eines Sitzkörpers aus Schaumstoff (Schaumkunststoff) mit einer elektrisch beheizbaren Auflage, die mit dem Sitzkörper oder Polster verklebt und beide zuammen mit einem Bezugsstoff überzogen sind, ein neuer Fahrzeugsitz in jeweils gleichbleibender Produktqualität geschaffen wird und der geradezu ideal in fertigungstechnischer Hinsicht, d. h., für eine Serienfertigung bestens geeignet ist.

Eine weitere Lösung der Erfindung ist in einem Herstellverfahren zu sehen, bei dem

a) eine Auflage mit einem Haftkleber versehen wird,

b) mit einem Sitzkörper verbunden wird und

c) danach mit einem Bezug versehen wird.

Hierdurch wird eine stets gleichbleibende einfache und unabhängige Montage ermöglicht, die sich besonders für die Serienfertigung im Automobilbau eignet. Unterschiedliche Herstellung, Anlieferung, Lagerung, Ausstattung und dgl. lassen sich überbrücken und miteinander vereinbaren, ohne die Produktqualität oder besondere Ausstattungswünsche zu beeinträchtigen. Vor- oder Nacharbeiten sind nicht mehr erforderlich. Durch die Wahl eines Haftklebers genügt bei der Montage bereits ein geringer Druck. Haftkleber aus den verschiedenen Produktgruppen, wie z. B. Kautschukkleber oder Acrylatkleber, lassen sich dauerhaft verbinden. Sie sind für die verschiedensten Schaumstoffe geeignet.

Die Erfindung ist in der beigefügten Zeichnung rein schematisch dargestellt und anhand dieser Zeichnung nachfolgend erläutert.

Es zeigen:

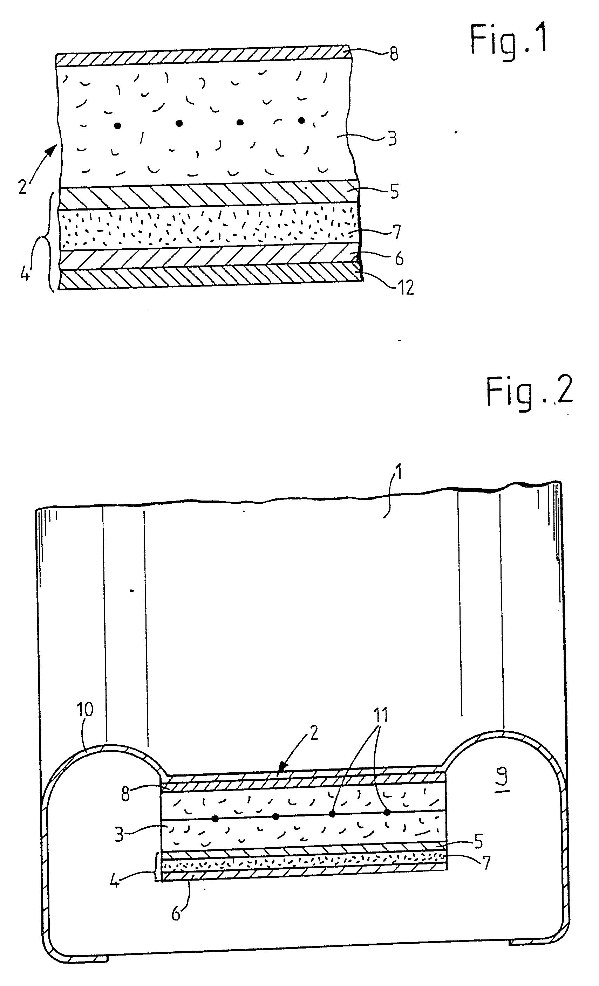

Fig. 1 die heizbare Auflage,

Fig. 2 den Fahrzeugsitz 1 mit aufgeklebter heizbarer Auflage 2 im Schnitt.

Der Sitz 1 besteht einschließlich seiner Lehnen (Arm- und Rückenlehnen) aus einem Polyurethanvollschaumkörper 9 als Polster.

Die Auflage 2 besteht im wesentlichen aus einem zweigeteilten Schaumstofformkörper 3, insbesondere nach dem Entnehmen aus der Form zugeschnitten, in Form eines Sitzkissens. Die beiden Teile bilden horizontale Hälften, zwischen denen der Heizleiter 11 eingelegt und/oder formschlüssig gehalten ist. Beide Hälften werden miteinander dann verklebt. Stattdessen kann der Heizleiter auch in einen einstückigen Fremdkörper 3 eingeschäumt sein.

Die Auflage 2 ist einseitig an ihrer dem Sitzkörper 9 als Polster zugekehrten Seite mit wenigstens einer Klebemittelschicht, insbesondere einem Haftkleber versehen. Besonders bewährt hat sich ein Klebeband, insbesondere ein Doppelklebeband 4.

Das Doppelklebeband 4 besitz einen Träger 7, z. B. aus Schaumstoff, einer Folie, Papier, Flies, Gewebe als Kern, der sandwichartig auf beiden Seiten mit einem Klebefilm oder einer Klebemittelschicht 5, 6 beschichtet ist, so daß eine Seite 5 der späteren Sitzfläche zugekehrt ist und die andere Seite 6 dem Sitzkörper 9 als Polster.

Auf der Seite 6, im angeklebten Zustand nicht mehr vorhanden, ist die dort vorher entfernte Abdeckung 12 wie Schutzfolie (dehäsiv beschichtet) oder ein doppelseitig silinisiertes Papier.

Als Klebemittel kommen vor allem Kautschukkleber, Acrylatkleber ect. in Frage, die sich in hochviskosem flüssigem Zustand befinden (Adhäsionskleber). Sie sind besonders geeignet für Kunststoffklebungen, die folgende Schwierigkeiten aufweisen:

- Die Oberfläche der einzelnen Kunststoffe haben sehr unterschiedliche physikalisch-chemische Merkmale. Diese Merkmale wie z. B. unterschiedliche chemische Grundbausteine, polare Struktur, Diffusionsverhalten, kritische Oberflächenenergien usw. bewirken ein unterschiedliches Adhäsionsverhalten zu den verschiedenen Klebstoffarten.

- Die mechanischen Kenndaten der Kunststoffe (z. B. Elastizitätsmodul) sind eine Größenordnung (Zehnerpotenz) kleiner als die der meisten anderen Werkstoffe; sie streuen außerdem stärker. Da in einer belasteten Klebung die Fügeteildehnung der Klebschicht zusätzliche Verformung aufzwingt, müssen Klebstoffe für Kunststoffklebungen besonders verformungsfähig sein.

Die gewählte Klebeverbindung der Heizausflage 2 mit dem Polster 9 hat folgende Vorteile:

**a) Sicherstellung einer standhaften Verklebung zwischen Heizelement und PUR-W-Polster**

Dies gilt insbesondere unter Berücksichtigung von Tem peraturen, Trennmitteleinfluß sowie mechanischer und dynamischer Belastung.

## b) Klebstoffeinfluß auf die Sitzfläche

Die weich-elastischen Eigenschaften der Sitzfläche bleiben unbeeinflußt; d. h., die Verklebung führt zu keiner Versprödung oder Versteifung. Es ist weiterhin sichergestellt, daß es zu keiner Verschlechterung des Schwingungs-, Dämpfungsverhaltens und des allgemeinen Sitzkomforts kommt.

## c) Produktionsfreundlichkeit

Die schnelle und gesundheitlich unbedenkliche Handhabung schafft die Voraussetzung für einen (Serien-) Fließbandeinsatz. Diese Tatsache schließt z. B. Kleber mit langen Abbinde- und Reaktionszeiten von vorneherein aus.
Ein weiteres Hindernis für z. B. lösungs- oder treibmittelhaltige Klebstoffe stellt die Installation hierfür notwendiger Gerätschaften (Absaugasnlagen, Be- und Entlüftung) dar. Ein gesteigertes Gesundheitsrisiko, zusätzliche Investitionen, sowie ein weitreichender Eingriff in den Fertigungsablauf lassen einen solchen Klebstoff nicht zu. Ähnliches gilt auch für die Klasse der Schmelzklebstoffe. Versuche zeigten zudem, daß die für die Aktivierung des Klebers notwendige Hitze sowie der notwendige Fügedruck bei der Verklebung der Elemente zu sichtbaren und bleibenden Veränderungen am PUR-Kissen führen.

## d) Einfluß auf das Sitzklima

Die Verklebung hat bei geeigneter Lochung und Konfektionierung auf das allgemeine Sitzklima (Luft-und Wasserdampfdurchlässigkeit) gezeigt, daß auch im Sommer der Sitzkomfort und das Sitzgefühl nicht beeinträchtigt wird.

## e) Brennverhalten

Das Brenn- bzw. Flammverhalten genügt den jeweils maßgebenden Vorschriften und Gesetzen.

## f) Reparaturfreundlichkeit

Eine Reparatur bei einem Heizelementdefekt ist einfach durchführbar. Bei einem defekten Heizleiter kann jeder Zeit eine neue Auflage aufgeklebt werden.
Nachdem die Auflage 2 mit dem Polster verklebt wurde, wird der Sitz mit der Auflage zusammen durch einen textilen Bezug überzogen. Der Bezugsstoff, auch Schutz, Design usw., kann in gewünschter Farbe, Muster oder Qualität gewählt werden. Die elektrischen Anschlüsse der Heizleiter 11 werden dabei in üblicher Weise hinter dem Bezug 10 herausgeführt und mit dem Bordnetz verbunden. Der Heizleiter 11 kann auch selbstregulierend, insbesondere widerstands- und temperaturbegrenzend ausgeführt sein, wie an sich bekannt. Bei dem Überziehen mit dem Bezugsstoff 10 liegt dieser mit Vorteil auf einem Trikotgewebe auf, (bei 8) welches zur Verstärkung des Schaumstoffes dient und diesen vor Einreißen bei Belastung schützt. Das Heizelement aus Schaumstoff sollte auf der dem Bezug zugekehr ten Seite möglichst glatt sein, um ein Verhaken zwischen Bezug und Heizelement zu vermeiden. Anstelle einer Trikotgewebeschicht 8 kann auch ein Faserflies, ein Filz oder eine Beflockung angewandt werden.

## Ansprüche

1. Elektrisch beheizbare, insbesondere an das bordeigene Netz (Stromversorgung) eines Fahrzeuges anschließbare Auflage, wie Kissen, Decke, Plaid oder dergleichen, mit Heizleiter in bestimmtem Muster auf einem flächigen Träger aus nachgiebigem, gegebenenfalls anschmiegsamen oder flexiblen Material für Sitze in Fahrzeugen, geeignet zur Aufnahme von Personen, dadurch gekennzeichnet, daß die Auflage (2) als selbstständiges Teil ausgebildet ist, das mit einem wenigstens teilweise der Sitzfläche zugekehrten Teil des Fahrzeugsitzes/-körpers (1, 9) durch Kleben verbindbar ist.

2. Auflage nach Anspruch 1, dadurch gekennzeichnet, daß sie im wesentlichen aus Schaumstoff (3) (Schaumkunststoff), insbesondere Weichschaumstoff mit darin eingebettetem elektrischen Heizleiter (11), besteht.

3. Auflage nach Anspruch 1 oder 2, dadurch gekennzeichnet, daß sie aus miteinander verklebten Schaumstoffteilen besteht, die zwischen sich den elektrischen Heizleiter aufnehmen.

4. Auflage nach einem der Ansprüche 1 oder 2, dadurch gekennzeichnet, daß der elektrische Heizleiter (11) in einem einstückigen Schaumstoffkörper (3) (Schaumkunststoff) eingebettet, insbesondere eingeschäumt ist.

5. Auflage nach einem der vorhergehenden Ansprüche, dadurch gekennzeichnet, daß sie mit einem Klebemittel (5) einseitig versehen ist.

6. Auflage nach Anspruch 5, dadurch gekennzeichnet, daß sie mit einem Klebeband, insbesondere einem Doppelklebeband (4), versehen ist.

7. Auflage nach Anspruch 6, dadurch gekennzeichnet, daß das Doppelklebeband (4) eine Lochung oder Perforierung aufweist.

8. Auflage nach Anspruch 5, 6 oder 7, dadurch gekennzeichnet, daß sie auf ihrer Klebeseite eine abziehbare Schutzabdeckung (12) aufweist.

9. Fahrzeugsitz, gekennzeichnet durch die Kombination eines Sitzkörpers aus Schaumstoff (9) (Schaumkunststoff) mit einer elektrisch beheizbaren Auflage (2), welche mit letzterem (1) verklebt und beide zusammen mit einem Bezugsstoff (10) (Textilie) überzogen sind.

10. Verfahren zur Herstellung eines flächenhaft elektrisch beheizbaren Fahrzeugsitzes und/oder Fahrzeugteiles im Sitzbereich, indem,

a) eine heizbare Auflage mit einem Haftkleber versehen wird,

b) die Auflage mit einem Sitzkörper verbunden wird und

c) danach der Sitz mit Auflage durch einen Bezug (Textilie) überzogen wird.

Fig.1

Fig.2